# EUROPEAN PATENT SPECIFICATION

(11) **EP 0 857 774 B1**
(45) Date of publication and mention of the grant of the patent: **19.12.2001**
(21) Application number: 98250047.2
(22) Date of filing: 09.02.1998
(51) Int. Cl.: C09K 19/42, C09K 19/44, C09K 19/46

(54) **Liquid crystal composition and liquid crystal display device**
Flüssigkristallzusammensetzung und Flüssigkristallanzeigevorrichtung
Composition liquide cristalline et dispositif d'affichage à cristaux liquides

(30) Priority: 10.02.1997 JP 2660197
(43) Date of publication of application: 12.08.1998
(73) Proprietor: CHISSO CORPORATION, Osaka-shi, Osaka-fu 530-0005 (JP)
(72) Inventor: Hachiiya, Norihisa, Yashio-shi, Saitama 340-0815 (JP); Murashiro, Katsuyuki, Chiba 266-0012 (JP); Takeshita, Fusayuki, Kimitsu-shi, Chiba-ken 299-1132 (JP); Matsushita, Tetsuya, Sodegaura-shi 299-0246 (JP); Nakagawa, Etsuo, Ichihara-shi, Chiba-ken 290-0056 (JP)
(74) Representative: Ziebig, Marlene, Dr. Dipl.-Chem.

(56) References cited:
- EP-A- 0 096 850
- EP-A- 0 168 012
- EP-A- 0 398 606
- EP-A- 0 717 093
- DE-A- 3 921 836
- GB-A- 2 240 778
- US-A- 5 453 864
- DATABASE WPI Section Ch, Week 8338 Derwent Publications Ltd., London, GB; Class E14, AN 83-767191 XP002070676 -& JP 58 134 046 A (CHISSO CORP)
- DATABASE WPI Section Ch, Week 9304 Derwent Publications Ltd., London, GB; Class E14, AN 93-030492 XP002070677 -& JP 04 356 432 A (SEIKO EPSON CORP)
- DATABASE WPI Section Ch, Week 9251 Derwent Publications Ltd., London, GB; Class E14, AN 92-418591 XP002070678 & JP 04 312 540 A (SEIKO EPSON CORP)

## Description

The present invention relates to a novel nematic liquid crystal composition and a liquid crystal display device comprising the liquid crystal composition. More specifically, the invention relates to a liquid crystal composition suitable for twist nematic (TN) mode or super twist nematic (STN) mode, and relates to a liquid crystal display device comprising the liquid crystal composition.

### BACKGROUND ART

Liquid crystal display devices (LCD) such as a twist nematic LCD (TN-LCD), a supertwist nematic LCD (STN-LCD), and an active matrix LCD (AM-LCD) have been proposed and put to practical use one after another.

TN or STN liquid crystals used for such liquid crystal display devices are required
(1) to exhibit a nematic liquid crystal phase at a wide range of temperatures including room temperature,
(2) to have low threshold voltage to reduce electric power to be consumed,
(3) to have low viscosity (η) to shorten response time (τ) as much as possible,
(4) to be capable of having suitable optical anisotropy (Δn) depending on the type of liquid crystal display devices, and
(5) to be chemically stable.

In recent years, it is strongly required to provide LCDs which can cope with dynamic picture images, and various measures have been studied for each of LCD display modes. For instance, it is proposed by G. Bauer reported (Cryst. Liq., 63, 45(1981)) that the product (Δn · d) of the optical anisotropy (Δn) of a liquid crystal material to be filled in a cell multiplied by the thickness of the cell (d) µm is set at a certain value (for example, Δn · d = 0.5 and Δn · d = 1.0) in display modes using a TN liquid crystal, in which the direction of the orientation of liquid crystal molecules is twisted by 90° between the upper and lower substrates, to avoid the occurrence of interference patterns on the cell surface. According to the method, the value of d can be decreased when a liquid crystal material having a large value of Δn is used. When d becomes small, response time (τ) remarkably shortens since τ is directly proportional both to the viscosity (η) of a liquid crystal material and to the square of the cell thickness d. Accordingly, it is very useful for liquid crystal compositions used in such liquid crystal display devices to have a large value of Δn and low viscosity.

On the other hand, in the display modes using a super twisted nematic (STN) liquid crystal, in which the direction of the orientation of liquid crystal molecules is twisted by 180 to 270° between the upper and lower substrates, proposed by T. J. Scheffer et al. (Appl. Phy. Lett., 45 (10), 1021 (1984)), the optical path length of birefringence Δn · d is adjusted to a certain value (for example, Δn · d = 0.85) since the modes use particularly interference color by the effect of birefringence for the display. According to the method, the response time (τ) remarkably shortens when a liquid crystal material having a large value of Δn is used, as described above. Thus, it is very useful also for STN liquid crystal compositions to have a large value of Δn.

Liquid crystal compositions having a large value of Δn (for example, Δn ≧ 0.18) are required especially for an active addressing driving mode, electrically controlled birefringence mode, and so on.

Further, in keeping with the downsizing of products comprising a liquid crystal display device to a portable size, developments of liquid crystal compositions with the object of using them outdoors have come to be conducted. In order to stand outdoor uses, liquid crystal compositions are required to exhibit a nematic phase in a range over that of environmental temperatures at which liquid crystal compositions are ordinarily used. From this point of view, it is principally required that an upper limit value of a nematic phase transition temperature of liquid crystal compositions (clearing point: T_{NI}) is equal to or higher than 80°C and a lower limit value of the nematic phase transition temperature (T_{L}) is equal to or below -30°C.

As the prior art with the object of using liquid crystal compositions at a wide range of temperatures, some liquid crystal compositions are disclosed in DE 3,921,836 and Laid-open Japanese Patent Publication No. Sho 58-134,046. However, the DE 3,921,836 and Laid-open Japanese Patent Publication No. Sho 58-134,046 have not disclosed at all about a large value of Δn.

Besides, the DE 3,921,836 and Laid-open Japanese Patent Publication No. Sho 58-134,046 have not specifically disclosed about the components in liquid crystal compositions and mixing ratio of the components in the compositions necessary for developing the characteristics of liquid crystal compositions.

Whereas liquid crystal compositions are diligently studied depending on various purposes, it is the present situation that novel improvements are all the time required.

### DISCLOSURE OF THE INVENTION

An object of the present invention is to provide liquid crystal compositions which have a large value of optical anisotropy (Δn) in particular, is excellent in miscibility at low temperatures, and have a wide range of a nematic phase while satisfying various properties required for TN-LCD or STN-LCD display modes.

Other objects and advantages of the present invention will become apparent to those skilled in the art from the following description and appended claims.

The present invention in order to achieve the objects described above is summarized as follows:
(1) A liquid crystal composition comprising, as a first component, at least one compound expressed by the general formula (1-1) or (1-2) 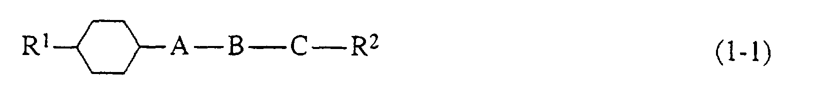 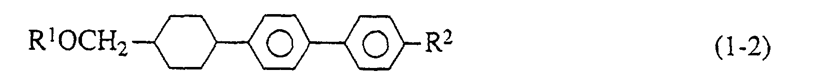 wherein R¹ and R² independently represent an alkyl group having 1 to 10 carbon atoms; and rings A, B, and C independently represent 1,4-phenylene provided that at least one of the rings A, B, and C represents 1,4-phenylene in which H at lateral position(s) are replaced by F,
   comprising, as a second component, at least one compound selected from the group consisting of the compounds expressed by the general formula (2-a), (2-b), (2-c), (2-d), or (2-e) 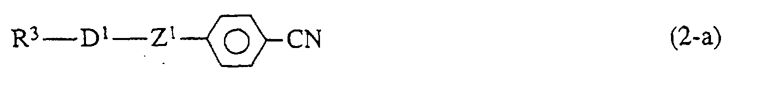 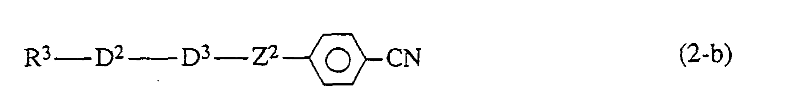 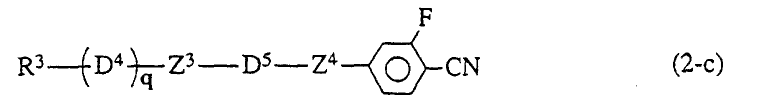 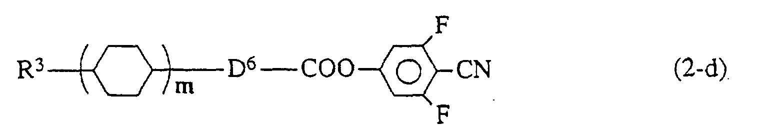 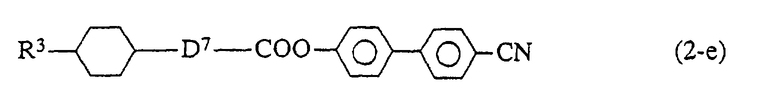 wherein R³ represents an alkyl group having 1 to 10 carbon atoms or an alkenyl group having 2 to 10 carbon atoms, any one or non-adjacent two or more methylene groups (-CH₂-) in the alkyl or alkenyl group may be replaced by oxygen atom (-O-); Z¹ represents -COO-, -C₂H₄-, or single bond; Z² and Z³ represent -C₂H₄- or single bond; Z⁴ represents -COO-, -C₂H₄-, or single bond; D¹ represents trans-1,4-cycloheyxlene, 1,4-phenylene, or 1,3-dioxane-trans-2,5-diyl; D², D³, D⁴, D⁶, and D⁷ independently represent trans-1,4-cyclohexylene or 1,4-phenylene; D⁵ represents trans-1,4-cyclohexylene or 1,4-phenylene, one H at a lateral position of the 1,4-phenylene may be replaced by F; and q and m are independently 0 or 1, and
   comprising, as a third component, at least one compound selected from the group consisting of the compounds expressed by the general formula (3)

   R⁴-G¹-Z⁵-G²-R⁵ (3)

   wherein R⁴ and R⁵ independently represent an alkyl group having 1 to 10 carbon atoms or an alkenyl group having 2 to 10 carbon atoms, any one or non-adjacent two or more methylene groups (-CH₂-) in the alkyl or alkenyl group may be replaced by oxygen atom (-O-); G¹ represents trans-1,4-cyclohexylene, 1,4-phenylene, or pyrimidine-2,5-diyl; G² represents trans-1,4-cycloheyxlene or 1,4-phenylene; and Z⁵ represents -C≡C-, -CH=CH-, -C₂H₄-, -COO-, or single bond.
(2) The liquid crystal composition recited in paragraph (1) above wherein the amount of the first component is 3 to 30 %, that of the second component is 30 to 70 %, and that of the third component is 10 to 50 %, respectively, based on the total weight of liquid crystal composition.
(3) The liquid crystal composition recited in paragraph (1) or (2) above wherein the liquid crystal composition further comprises at least one compound selected from the group consisting of the compounds expressed by the general formula (4) or (5)

   R⁶―J¹―Z⁶―J²―Z⁷―J³―R⁷ (4)

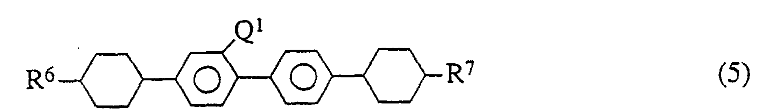

   wherein R⁶ represents an alkyl group having 1 to 10 carbon atoms or an alkenyl group having 2 to 10 carbon atoms, any one or non-adjacent two or more methylene groups (-CH₂-) in the alkyl or alkenyl group may be replaced by oxygen atom (-O-); R⁷ represents an alkyl or alkoxy group having 1 to 10 carbon atoms, or alkoxymethyl group having 2 to 10 carbon atoms; J¹ represents trans-1,4-cycloheyxlene, 1,4-phenylene, or pyrimidine-2,5-diyl group; J² represents trans-1,4-cycloheyxlene or 1,4-phenylene, one H at a lateral position of the 1,4-phenylene may be replaced by F; J³ represents trans-1,4-cycloheyxlene, 1,4-phenylene, or pyrimidine-2,5-diyl; Z⁶ represents -C₂H₄-, -COO-, or single bond; Z⁷ represents -C≡C-, -COO-, -CH=CH-, or single bond; and Q¹ represent H or F.
(4) The liquid crystal composition recited in any one of paragraphs (1) to (3) above wherein the liquid crystal composition further comprises at least one compound selected from the group consisting of the compounds expressed by the general formula (6) or (7) 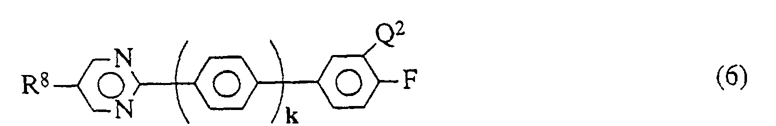 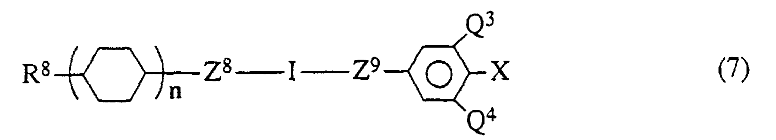 wherein R⁸ represents an alkyl group having 1 to 10 carbon atoms; I represents trans-1,4-cyclohexylene or 1,4-phenylene; Q², Q³, and Q⁴ independently represent H or F; Z⁸ and Z⁹ independently represent -COO-, -C₂H₄-, or single bond; k is 0 or 1; n is 0, 1, or 2; and X represents F or Cl.
(5) A liquid crystal display device comprising a liquid crystal composition recited in any one of paragraphs (1) to (4) above.

### BEST MODE FOR CARRYING OUT THE INVENTION

Now, the liquid crystal compounds constituting the liquid crystal compositions of the present invention are described in more detail.

As the compounds of a first component of the liquid crystal compositions of the present invention expressed by the general formula (1-1) or (1-2), the following compounds can preferably be mentioned:

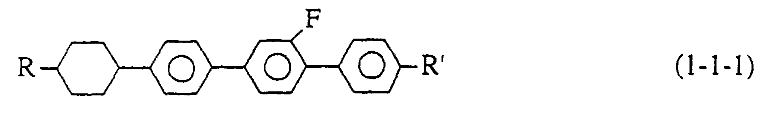

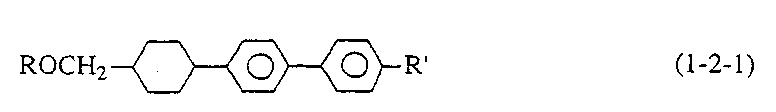

In these formulas, R and R' represent an alkyl group having 1 to 10 carbon atoms.

Compounds expressed by the general formula (1-1) or (1-2) are excellent in heat stability and chemical stability, and are used for the purpose of adjusting a nematic phase range, adjusting Δn, and/or adjusting viscosity.

As the compounds of a second component of the liquid crystal compositions of the present invention expressed by the general formula (2-1), (2-b), (2-c), (2-d), or (2-e), the following compounds can preferably be mentioned:

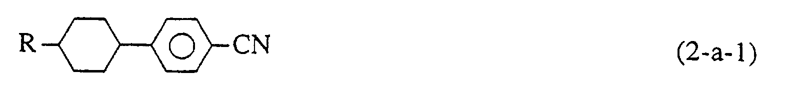

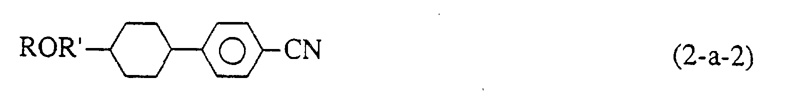

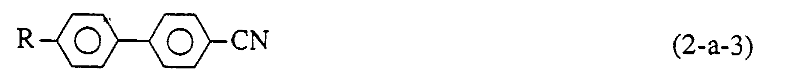

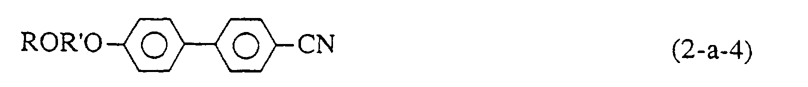

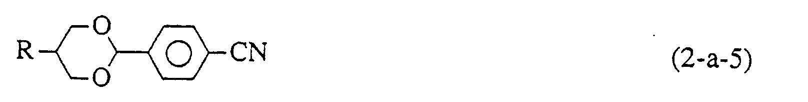

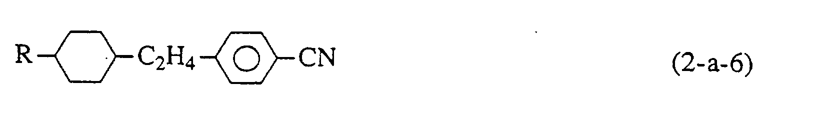

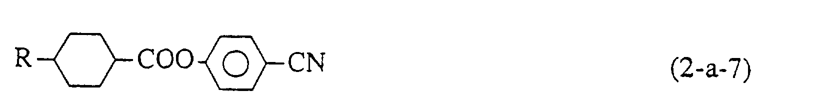

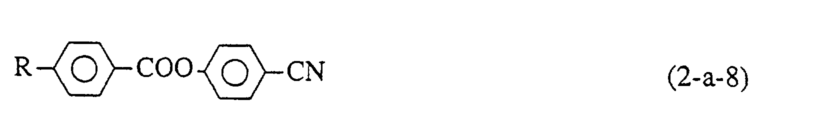

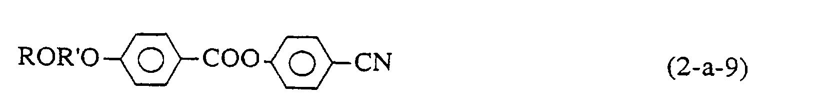

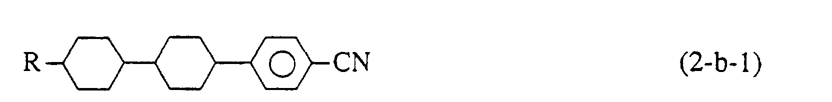

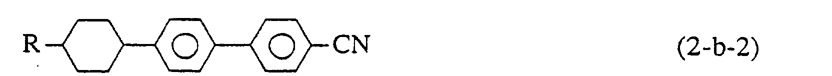

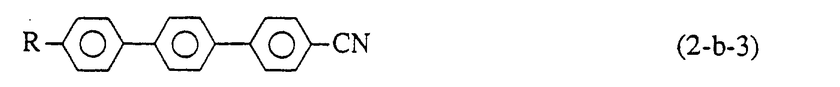

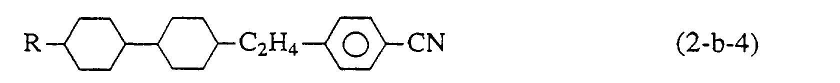

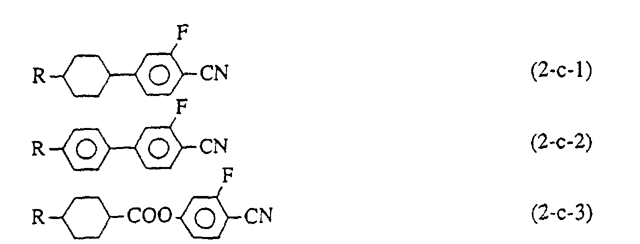

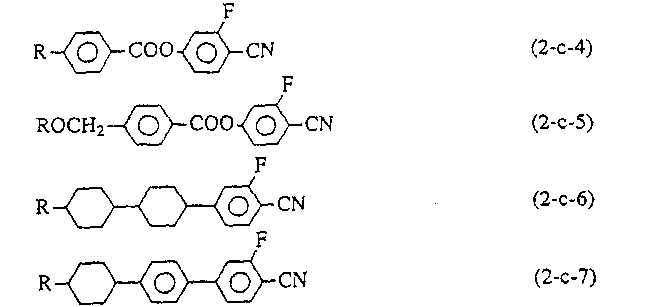

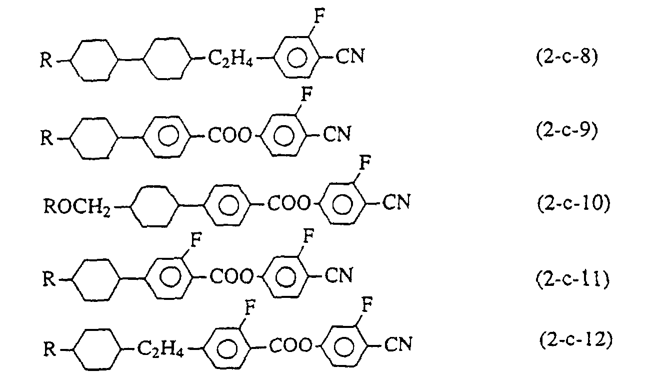

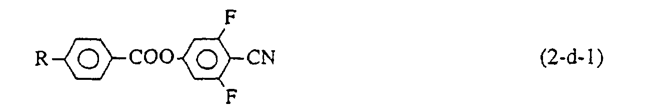

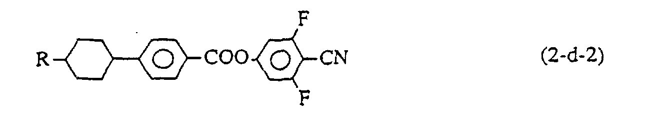

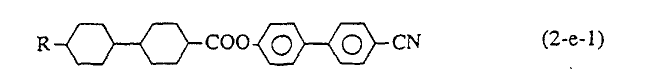

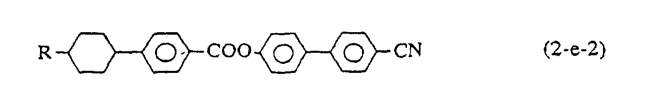

In these formulas, R represents an alkyl group having 1 to 10 carbon atoms or an alkenyl group having 2 to 10 carbon atoms, and R' represents an alkanediyl or alkenediyl.

Among these compounds, compounds expressed by one of the formulas (2-a-1), (2-a-2), (2-a-3), (2-a-4), (2-a-5), (2-a-8), (2-b-1), (2-b-2), (2-b-3), (2-c-1), (2-c-4), (2-c-5), (2-c-6), (2-c-9), (2-c-10), (2-c-11), (2-d-1), (2-d-2), (2-e-1), and (2-e-2) are preferably used in particular.

These compounds of the second component have a particularly large positive dielectric anisotropy and are used principally for the purpose of lowering threshold voltage and for the purpose of improving steepness which is important as STN characteristic.

As the compounds of a third component of the liquid crystal compositions of the present invention expressed by the general formula (3), the following compounds can preferably be mentioned:

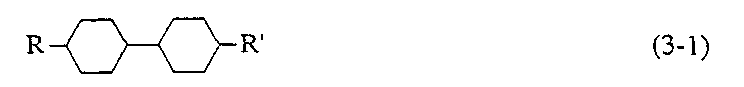

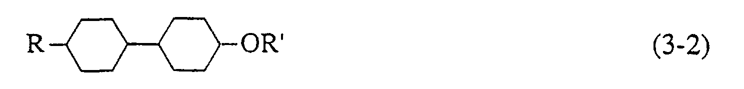

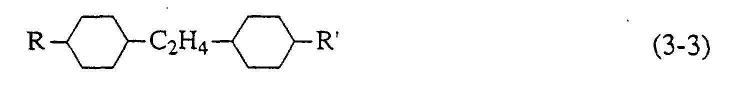

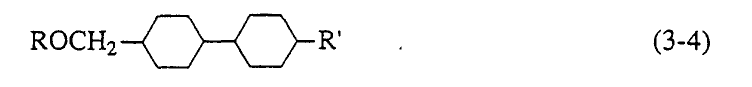

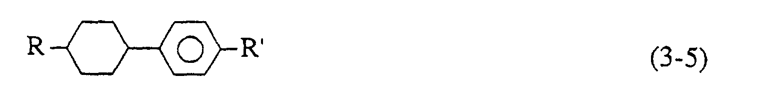

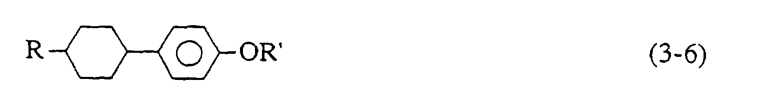

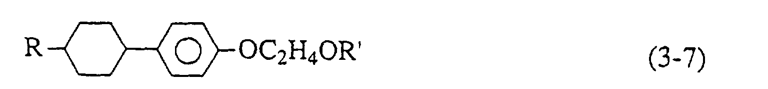

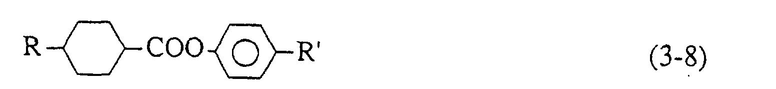

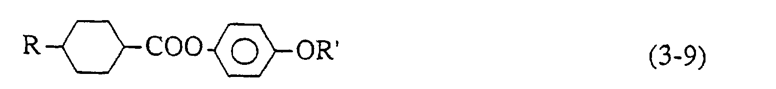

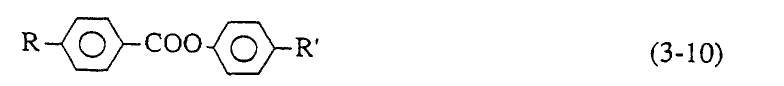

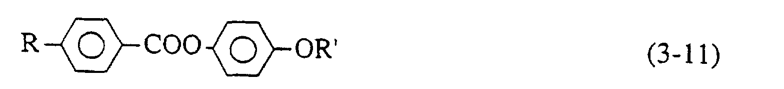

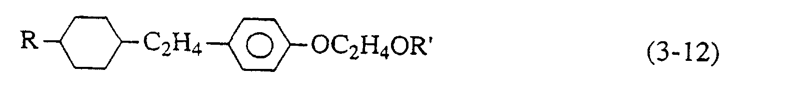

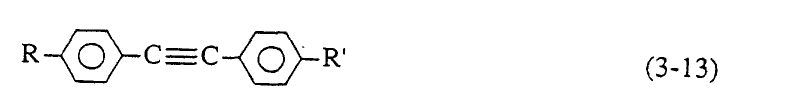

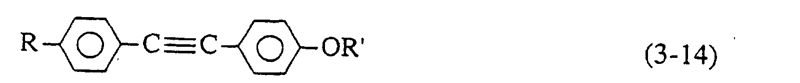

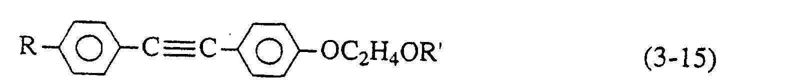

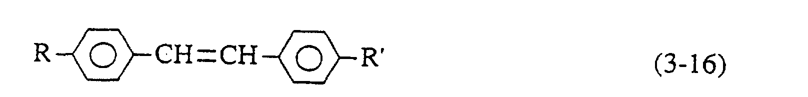

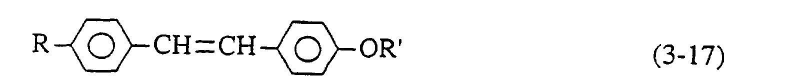

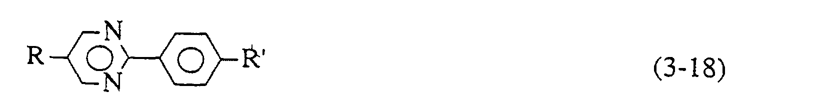

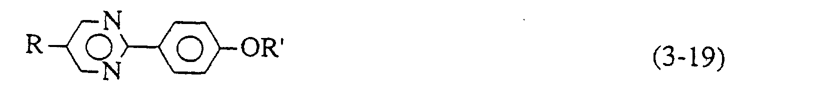

In these formulas, R and R' independently represent an alkyl group or alkenyl group.

Among these, compounds expressed by one of the formulas ((3-1), (3-2), (3-4), (3-5), (3-6), (3-8), (3-9), (3-13), (3-14), (3-18), and (3-19) are more preferably used as compounds of the general formula (3).

Compounds of the third component expressed by the general formula (3) are two-ring system compounds having negative or small positive dielectric anisotropy. Compounds of the general formula (3) are used principally for the purpose of reducing viscosity and/or adjusting Δn.

As the compounds expressed by the general formula (4) or (5), the following compounds can preferably be mentioned:

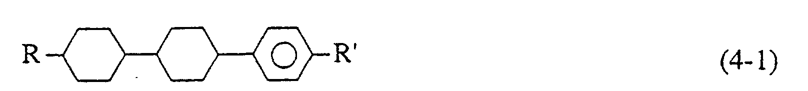

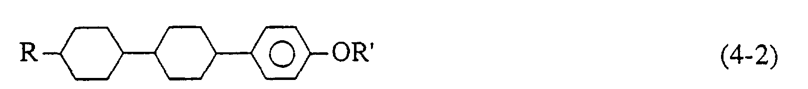

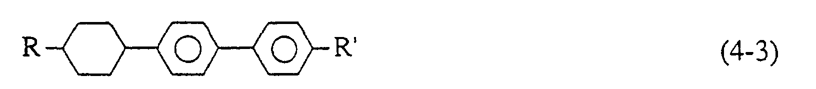

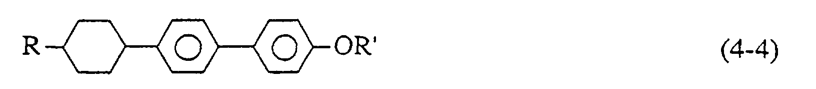

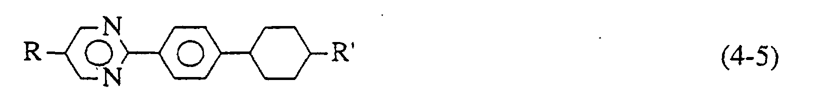

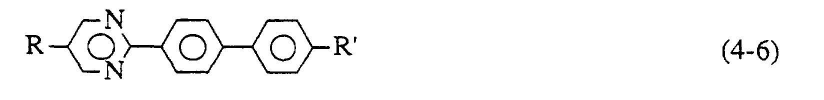

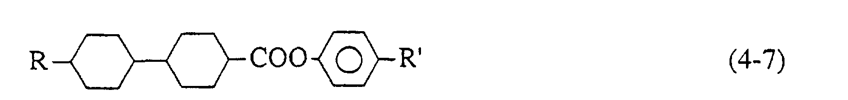

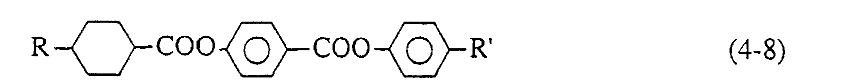

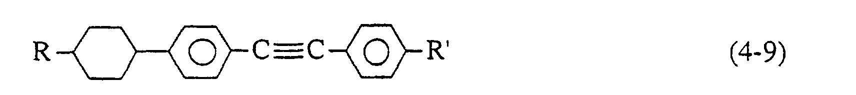

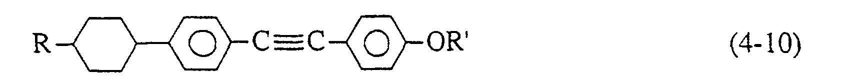

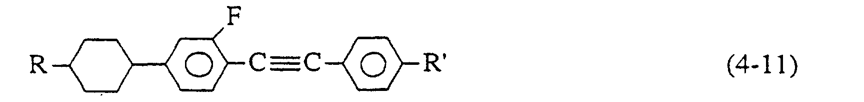

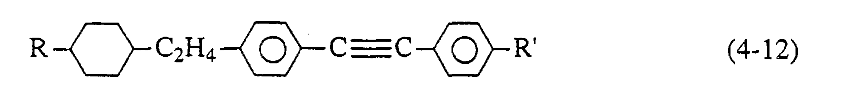

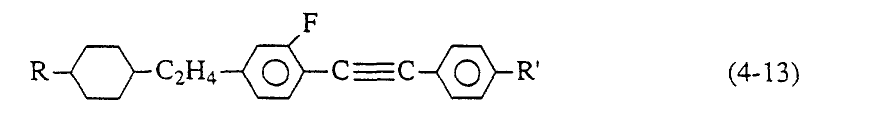

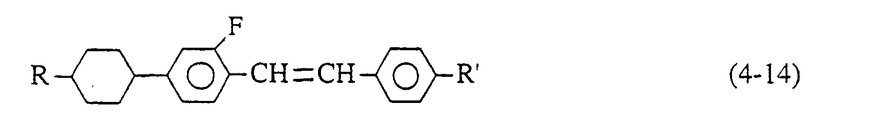

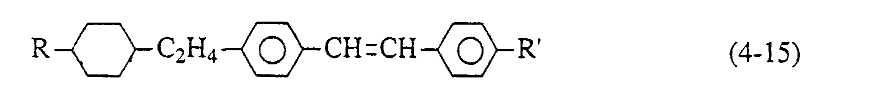

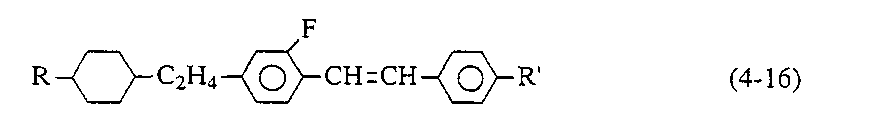

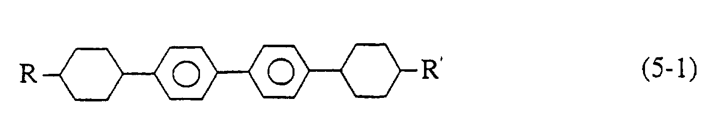

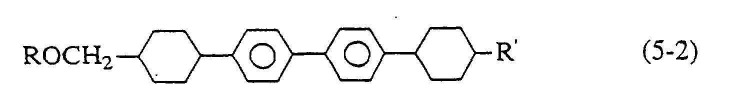

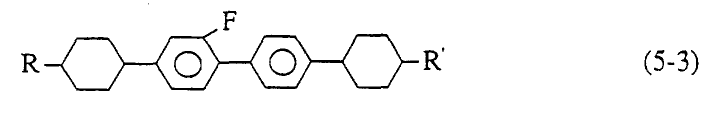

In these formulas, R and R' independently represent an alkyl group or an alkenyl group.

Among these, compounds expressed by one of the formulas (4-1), (4-2), (4-3), (4-5), (4-6), (4-8), (4-9), (4-11), (4-12), (4-14), (4-15), (5-2), and (5-3) are more preferably used as the compound expressed by the general formula (4) or (5) in the present invention.

Compounds of the general formula (4) or (5) are three-ring or four-ring system compounds having negative or small positive dielectric anisotropy. Compounds of the general formula (4) are used for the purpose of widening a nematic phase range and/or phase adjusting Δn and viscosity. Compounds of the general formula (5) are used for the purpose of widening a nematic range and/or adjusting Δn.

As the compounds expressed by the general formula (6) or (7), the following compounds can preferably be mentioned:

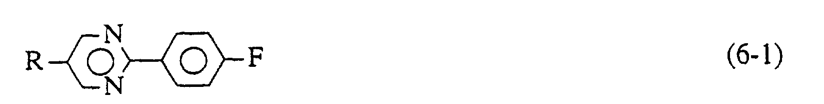

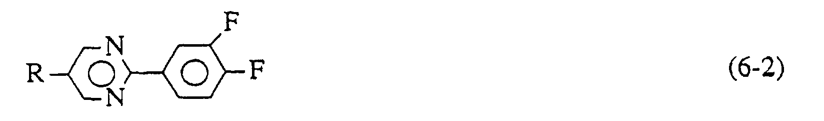

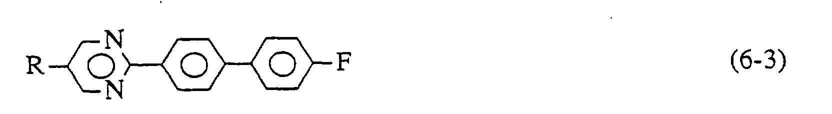

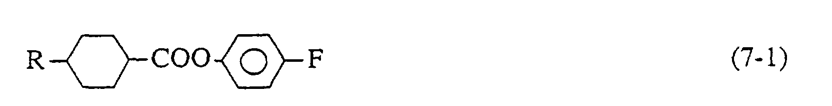

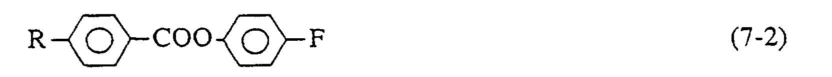

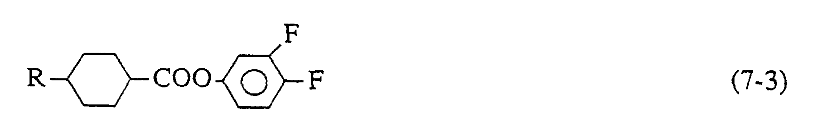

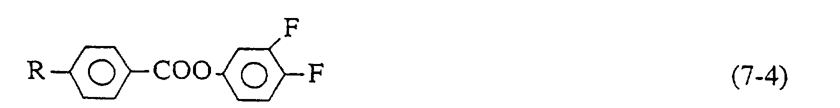

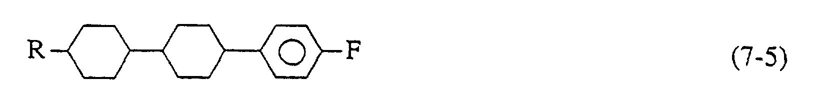

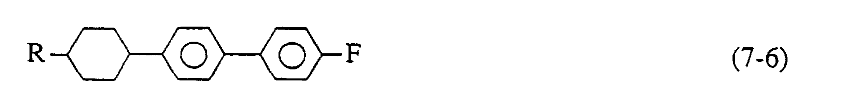

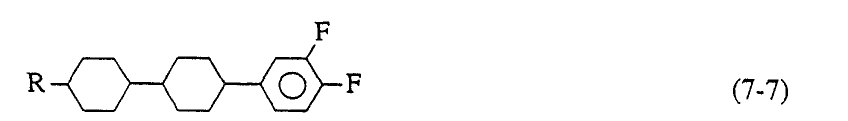

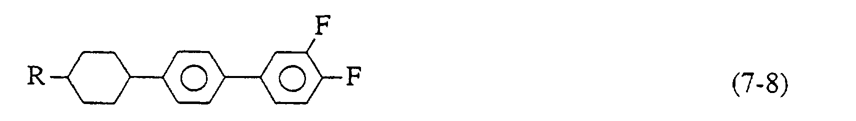

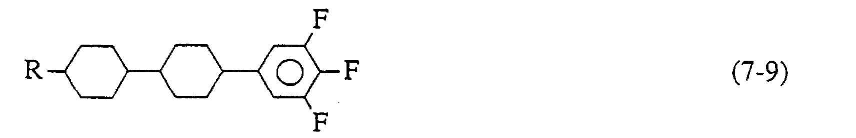

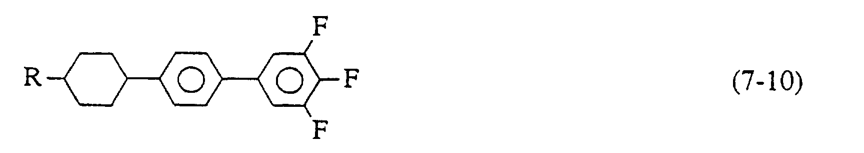

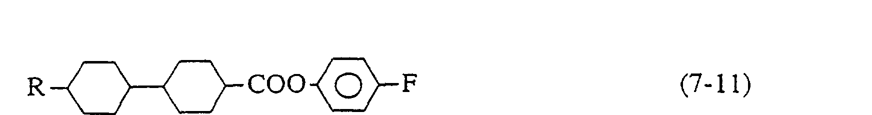

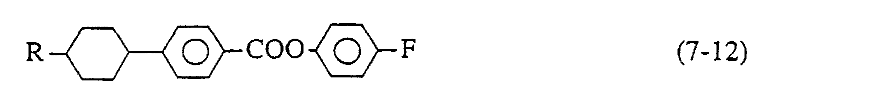

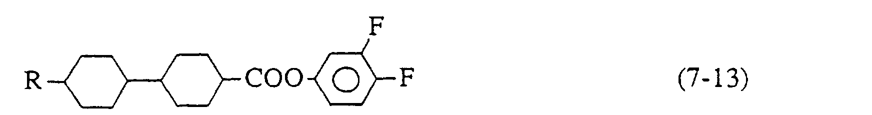

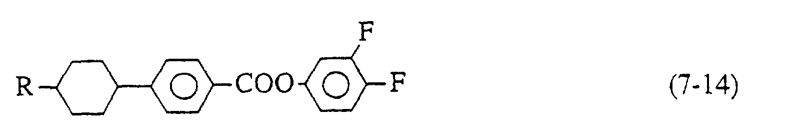

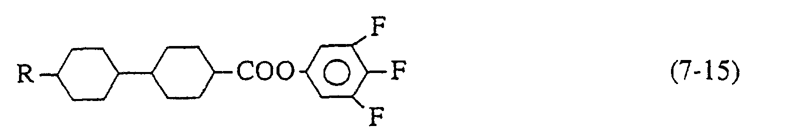

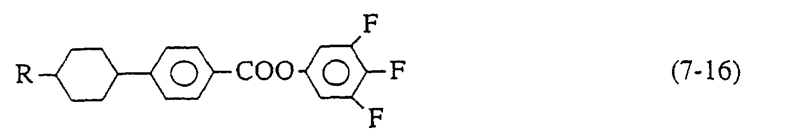

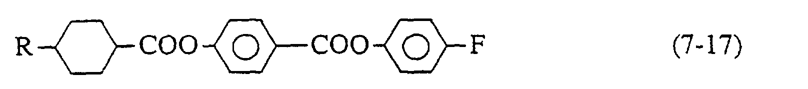

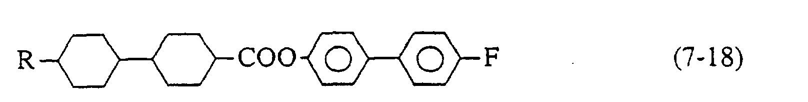

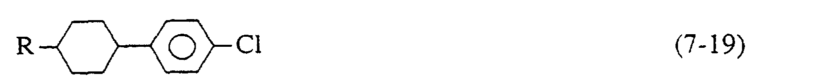

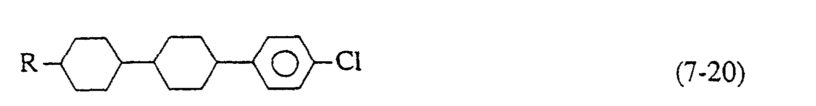

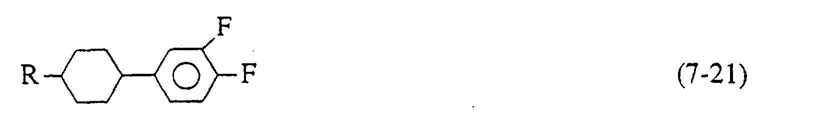

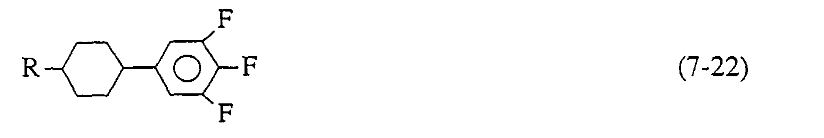

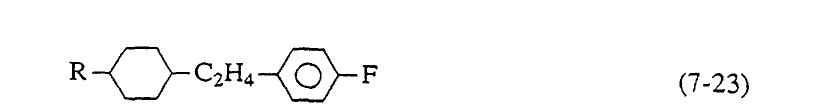

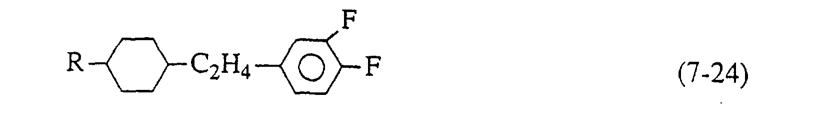

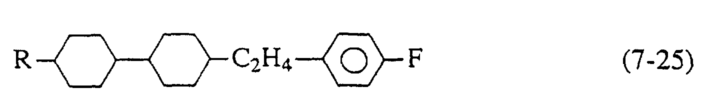

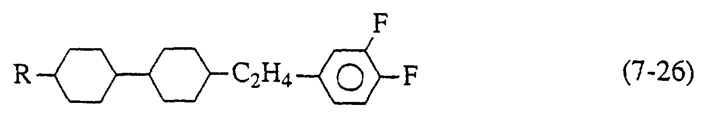

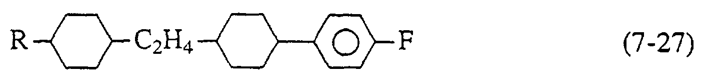

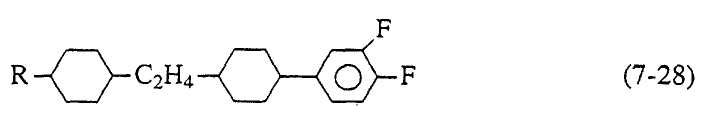

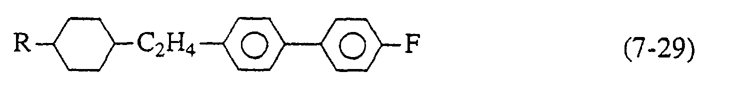

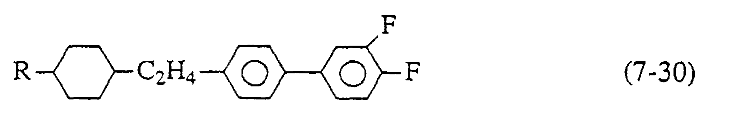

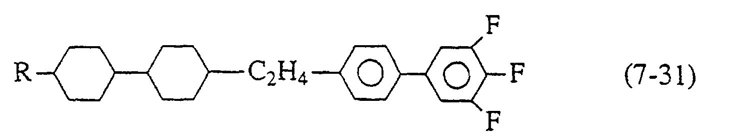

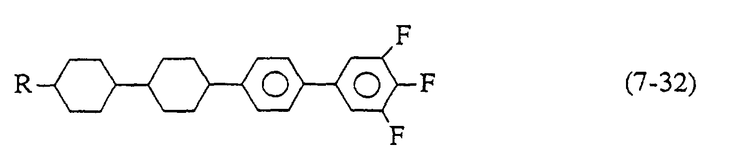

In these formulas, R represents an alkyl group.

As the compounds of the general formula (6), the compounds expressed by the formula (6-1), (6-2), or (6-3) are more preferably used in the present invention. As the compounds of the general formula (7), the compounds expressed by one of the formulas (7-1), (7-5), (7-6), (7-7), (7-8), (7-9), (7-10), (7-11), (7-12), (7-13), (7-14), (7-15), (7-16), (7-17), (7-18), (7-19), (7-20), (7-21), (7-22), (7-24), (7-28), (7-30), (7-31), and (7-32) are more preferably used in the present invention.

Compounds of the general formula (6) or (7) have positive dielectric anisotropy and are used for the purpose of particularly lowering threshold voltage and for the purpose of improving its dependency on temperature. They are also used for the purpose of adjusting viscosity, adjusting Δn, and widening a nematic phase range such as raising a clearing point.

Amount of the first component to be used in the present invention is preferably 3 to 30 % by weight and more preferably 5 to 20 % by weight based on the total amount of liquid crystal composition, respectively. When the amount is less than 3 % by weight, the effect of a large value of Δn, which is a principal subject of the present invention, can hardly be achieved, and when it exceeds 30 % by weight, miscibility of liquid crystal compositions at low temperatures sometimes becomes poor. Amount of the second component to be used is preferably 30 to 70 % by weight and more preferably 40 to 70 % by weight based on the total amount of liquid crystal composition, respectively. When the amount is less than 30 % by weight, threshold voltage of liquid crystal compositions sometimes becomes high, and when it exceeds 70 % by weight, the effect of a large value of Δn, which is a principal subject of the present invention, can hardly be achieved. Amount of the third component to be used is preferably 10 to 50 % by weight and more preferably 10 to 40 % by weight based on the total amount of liquid crystal composition, respectively. When the amount is less than 10 % by weight, viscosity of liquid crystal compositions sometimes becomes high, and when it exceeds 50 % by weight, a nematic range of liquid crystal compositions sometimes becomes narrow. Amount of the compounds of the general formula (4) or (5) to be used is preferably less than 40 % by weight and more preferably less than 30 % by weight based on the total amount of liquid crystal composition, respectively. When the amount exceeds 40 % by weight, threshold voltage of liquid crystal compositions sometimes becomes high. Amount of the compounds of the general formula (6) or (7) to be used is preferably less than 40 % by weight and more preferably less than 30 % by weight based on the total amount of liquid crystal composition, respectively. When the amount exceeds 40 % by weight, viscosity of liquid crystal compositions sometimes becomes high.

Depending on the purposes of liquid crystal display devices to be used, liquid crystal compositions of the present invention may comprise other compounds in such a suitable range that the objects of the present invention are not spoiled, in addition to the compounds expressed by one of the general formulas (1) to (7), for the purpose of adjusting threshold voltage, a nematic phase range, Δn, dielectric anisotropy, and viscosity.

Liquid crystal compositions of the present invention can be produced by methods which are conventional by themselves. In general, methods wherein various components are dissolved each other at a high temperature are employed. Liquid crystal materials of the present invention can be improved and optimized by adding suitable additives depending on intended uses. Such additives are well known in the art and described in the literatures in detail. Usually, a chiral dopant is added to induce a helical structure of liquid crystals and thereby adjust a required twisting angle and avoid a reverse-twist.

Further, the liquid crystal compositions of the present invention can be used as ones for guest-host (GH) mode by adding a dichroic dye such as merocyanine type, styryl type, azo type, azomethine type, azoxy type, quinophthalone type, anthraquinone type, or tetrazine type dye. The liquid crystal compositions of the present invention can also be used for a nematic curvilinear aligned phase (NCAP) liquid crystal display device which is prepared by the microencapsulation of a nematic liquid crystal, and for a polymer dispersed liquid crystal display device (PDLCD) represented by a polymer network liquid crystal display device (PNLCD) prepared by forming polymers of three-dimensional reticulated structure in a liquid crystal. In addition, the liquid crystal compositions of the present invention can be used as ones for electrically controlled birefringence (ECB) mode or dynamic scattering (DS) mode.

Now, the present invention will be described in more detail with reference to Examples and Comparative Examples. However, it should be understood that the scope of the present invention is by no means restricted by such specific examples. Amount of all compounds in the liquid crystal compositions in Examples and Comparative Examples is indicated in percentage by weight. Further, compounds used in Examples and Comparative Examples are designated according to the definition shown in Table 1 below.

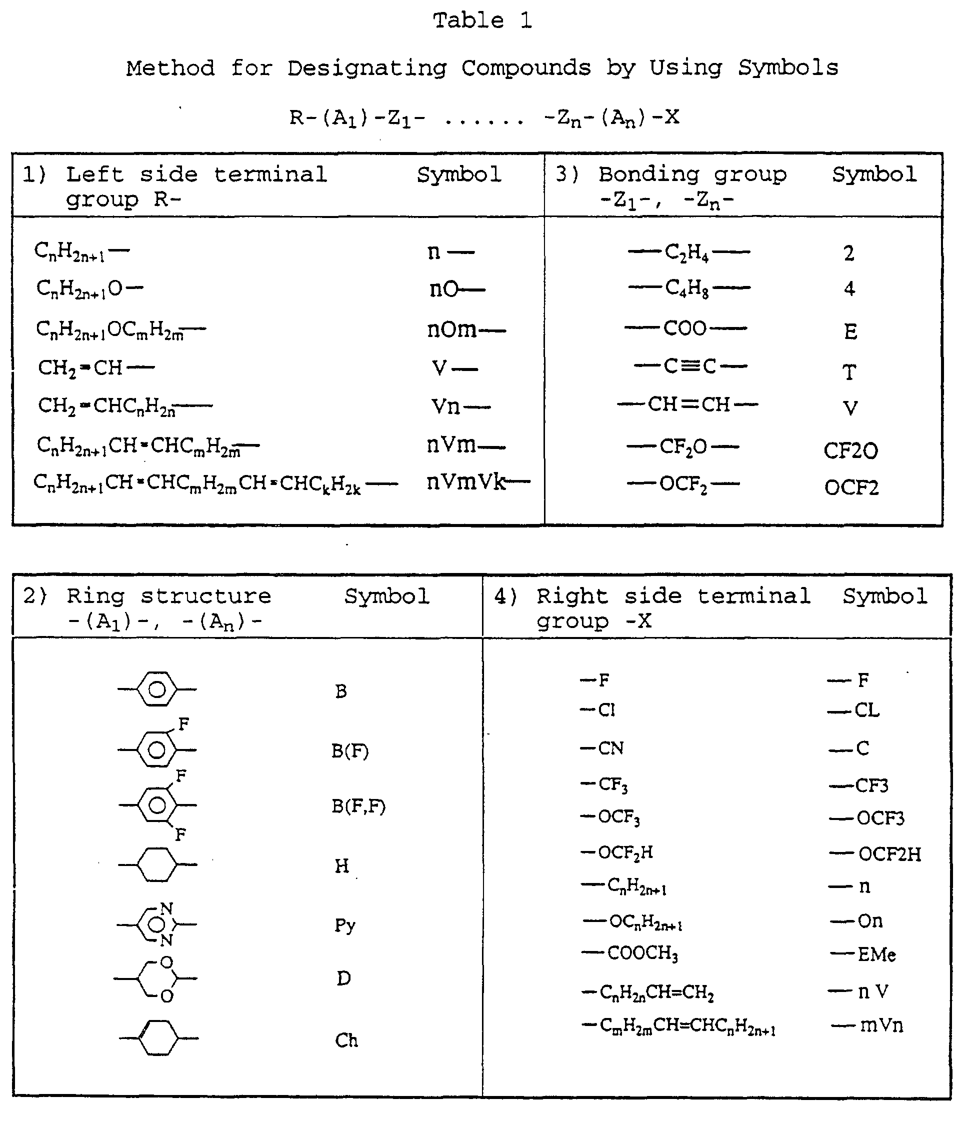

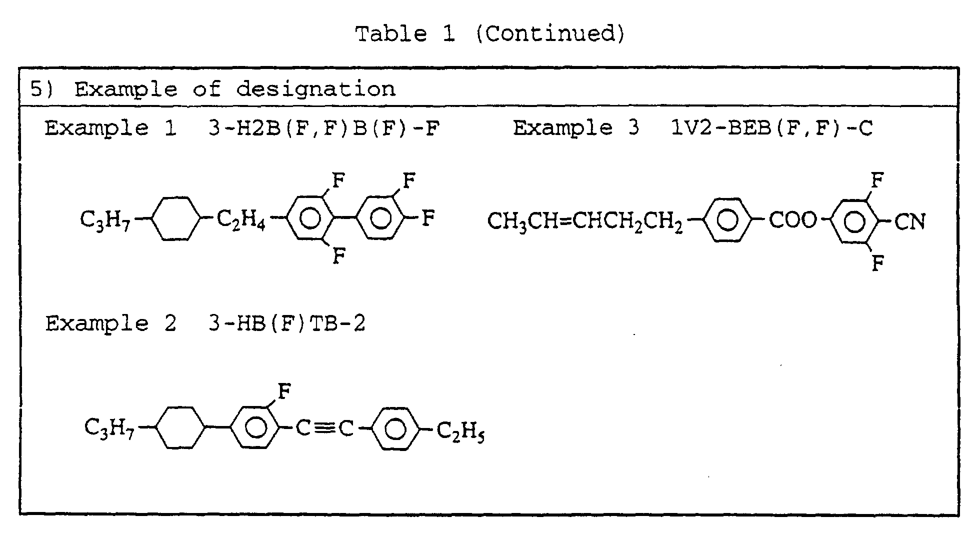

In the Examples and Comparative Examples, characteristics of liquid crystal compositions are shown by using an upper limit value of a nematic phase transition temperature (clearing point: T_{NI}), a lower limit value of a nematic phase transition temperature (T_{L}), viscosity at 20°C (η₂₀), optical anisotropy at 25°C (Δn), dielectric anisotropy at 25°C (Δε), and threshold voltage at 25°C (Vₜₕ). T_{L} point was judged based on the condition of the phase of a sample liquid crystal composition 30 days after the liquid crystal composition was left in freezers kept at 0°C, -10°C, -20°C, and -30°C, respectively.

### Comparative Example 1

The following liquid crystal composition disclosed in Laid-open Japanese Patent Publication No. Sho 58-134,046 was prepared:

| | |
|---|---|
| 201-HBB-1 | 15.0 % |
| 3-HB-C | 25.5 % |
| 5-HB-C | 34.0 % |
| 7-HB-C | 25.5 % |

T_{NI} = 60.7°C
-10°C < T_{C} < 0°C
η₂₀ = 24.8 mPa·s
Δn = 0.128
Vₜₕ = 1.66 V

This liquid crystal composition was poor in miscibility at low temperatures and narrow in the range of a nematic phase. Besides, its Δn was not sufficiently high and thus this liquid crystal composition is lacking in utility.

### Comparative Example 2

The following liquid crystal composition disclosed in DE 3,921,836 was prepared:

| | |
|---|---|
| 5-HBB(F)B-3 | 10.0 % |
| ZLI-1565 (produced by Merck) | 90.0 % |

T_{NI} = 117.0°C
-30°C < T_{L} < -20°C
η₂₀ = 17.6 mPa·s
Δn = 0.163
Δε = 7.9
Vₜₕ = 2.63 V

Whereas this liquid crystal composition had a high clearing point, its miscibility at low temperature was poor. Thus, the composition is lacking in utility. Besides, its threshold voltage Vₜₕ was high and thus the liquid crystal composition is lacking in utility even from this point of view.

### Example 1

| | |
|---|---|
| 5-HBB(F)B-2 | 10.0 % |
| V2-HB-C | 10.0 % |
| 1V2-HB-C | 10.0 % |
| 3-HB-C | 25.0 % |
| 3-HHB-C | 6.0 % |
| 3-HH-4 | 11.0 % |
| 4-BTB-O2 | 14.0 % |
| 5-BTB-O1 | 14.0 % |

T_{NI} = 81.7°C
T_{L} < -30°C
η₂₀ = 17.7 mPa·s
Δn = 0.169
Δε = 7.6
Vₜₕ = 1.89 V

This liquid crystal composition was excellent in miscibility at low temperatures, wide in the range of a nematic phase, and high in Δn.

### Example 2

| | |
|---|---|
| 5-HBB(F)B-3 | 15.0 % |
| 3O1-BEB(F)-C | 10.0 % |
| 2-BEB-C | 10.0 % |
| 3-BEB-C | 6.0 % |
| 2-HB(F)-C | 10.0 % |
| 3-HB(F)-C | 12.0 % |
| 2-HHB(F)-C | 10.0 % |
| 3-HHB(F)-C | 10.0 % |
| 3-HB-O2 | 12.0 % |
| 2-BTB-1 | 5.0 % |

T_{NI} = 81.0°C
T_{L} < -30°C
η₂₀ = 44.1 mPa·s
Δn = 0.140
Δε = 18.3
Vₜₕ = 1.06 V

### Example 3

| | |
|---|---|
| 1O1-HBB-2 | 5.0 % |
| V2-HB-C | 12.0 % |
| 1V2-HB-C | 12.0 % |
| 3-HB-C | 6.0 % |
| 5-HB-C | 10.0 % |
| 2-HHB-C | 6.0 % |
| 3-HHB-C | 6.0 % |
| 4-HHB-C | 6.0 % |
| 5-HHB-C | 6.0 % |
| 6-PyB-O5 | 2.5 % |
| 6-PyB-O6 | 2.5 % |
| 6-PyB-O7 | 2.5 % |
| 6-PyB-O8 | 2.5 % |
| 2-PyB-2 | 3.4 % |
| 3-PyB-2 | 3.3 % |
| 4-PyB-2 | 3.3 % |
| 2-BTB-1 | 11.0 % |

T_{NI} = 80.8°C
T_{L} < -30°C
η₂₀ = 23.6 mPa·s
Δn = 0.154
Δε = 9.0
Vₜₕ = 1.70 V

### Example 4

| | |
|---|---|
| 5-HBB(F)B-2 | 10.0 % |
| 1V2-BEB(F,F)-C | 12.0 % |
| 3O1-BEB(F)-C | 12.0 % |
| 101-HB-C | 12.0 % |
| 2-HHB-C | 4.0 % |
| 3-HHB-C | 5.0 % |
| 5-HHB-C | 7.0 % |
| 1O1-HH-5 | 5.0 % |
| 3-HEB-O4 | 3.2 % |
| 4-HEB-O2 | 2.5 % |
| 5-HEB-O1 | 2.5 % |
| 3-HEB-O2 | 2.0 % |
| 5-HEB-O2 | 1.6 % |
| 4-HEB-O4 | 3.2 % |
| 3-HHB-1 | 7.0 % |
| 3-HHB-01 | 4.0 % |
| 3-H2BTB-2 | 4.0 % |
| 3-H2BTB-4 | 3.0 % |

T_{NI} = 109.3°C
T_{L} < -30°C
η₂₀ = 45.0 mPa·s
Δn = 0.145
Δε = 20.5
Vₜₕ = 1.41 V

### Example 5

| | |
|---|---|
| 5-HBB(F)B-2 | 5.0 % |
| 2-BB-C | 8.0 % |
| 4-BB-C | 6.0 % |
| 2-HB-C | 10.0 % |
| 3-HB-C | 13.0 % |
| 2-HHB-C | 4.0 % |
| 3-HHB-C | 6.0 % |
| 3-HHEBB-C | 2.0 % |
| 3-HBEBB-C | 2.0 % |
| 2-BTB-01 | 12.0 % |
| 3-HHB-3 | 15.0 % |
| 5-PyB-F | 6.0 % |
| 3-PyBB-F | 6.0 % |
| 3-HHB-F | 5.0 % |

T_{NI} = 98.2°C
T_{L} < -30°C
η₂₀ = 24.7 mPa·s
Δn = 0.175
Δε = 10.3
Vₜₕ = 1.72 V

### Example 6

| | |
|---|---|
| 5-HBB(F)B-2 | 5.0 % |
| 301-HBB-2 | 4.0 % |
| 2-HB(F)-C | 11.0 % |
| 3-DB-C | 10.0 % |
| 4-HEB-3 | 1.6 % |
| 4-HEB-4 | 1.2 % |
| 4-HEB-5 | 0.7 % |
| 5-HEB-1 | 0.6 % |
| 5-HEB-5 | 0.9 % |
| 2-PYB-2 | 6.7 % |
| 3-PyB-2 | 6.7 % |
| 4-PyB-2 | 6.6 % |
| 2-HHB-C | 10.0 % |
| 3-HHB-C | 5.0 % |
| 3-HHB(F)-C | 8.0 % |
| 3-PyBH-2 | 4.0 % |
| 2-PyBH-3 | 4.0 % |
| 4-PyBB-3 | 6.0 % |
| 3-HEBEB-1 | 2.0 % |
| 5-PyB(F)-F | 4.0 % |
| 3-HBB(F,F)-F | 2.0 % |

T_{NI} = 86.1°C
T_{L} < -30°C
η₂₀ = 38.2 mPa·s
Δn = 0.150
Δε = 10.8
Vₜₕ = 1.49 V

### Example 7

| | |
|---|---|
| 5-HBB(F)B-2 | 10.0 % |
| 5-HBB(F)B-3 | 5.0 % |
| 2-HB(F)-C | 15.0 % |
| 2-HHB(F)-C | 13.0 % |
| 3-HHB(F)-C | 13.0 % |
| 3O1-HBE(F)-C | 2.0 % |
| 3-HB(F)EB(F)-C | 2.0 % |
| 2-BTB-01 | 4.0 % |
| 3-BTB-01 | 4.0 % |
| 4-BTB-01 | 4.0 % |
| 4-BTB-02 | 4.0 % |
| 5-BTB-01 | 4.0 % |
| 2-HHB(F)-F | 3.4 % |
| 3-HHB(F)-F | 3.3 % |
| 5-HHB(F)-F | 3.3 % |
| 2-H2HB(F)-F | 4.0 % |
| 3-H2HB(F)-F | 2.0 % |
| 5-H2HB(F)-F | 4.0 % |

T_{NI} = 118.2°C
T_{L} < -30°C
η₂₀ = 46.0 mPa·s
Δn = 0.163
Δε = 11.5
Vₜₕ = 1.59 V

### Example 8

| | |
|---|---|
| 1O1-HBB-4 | 5.0 % |
| V2-HB-C | 12.0 % |
| 1V2-HB-C | 11.0 % |
| 1V2-BEB(F,F)-C | 11.0 % |
| 5-HBB-C | 4.0 % |
| 3-HBEB(F,F)-C | 2.0 % |
| 2-BTB-1 | 8.0 % |
| 4-BTB-O2 | 8.0 % |
| 5-BTB-O1 | 6.0 % |
| 3-HH-4 | 6.0 % |
| 3-HB(F)TB-2 | 5.0 % |
| 3-HB(F)TB-3 | 6.0 % |
| 3-HB(F)VB-3 | 6.0 % |
| 101-HBBH-3 | 2.0 % |
| 3-HB-CL | 3.0 % |
| 3-HHB-CL | 5.0 % |

T_{NI} = 86.4°C
T_{L} < -30°C
η₂₀ = 25.1 mPa·s
Δn = 0.184
Δε = 12.3
Vₜₕ = 1.53 V

### Example 9

| | |
|---|---|
| 5-HBB(F)B-2 | 7.0 % |
| 3-HB(F)-C | 5.0 % |
| 2O1-BEB(F)-C | 5.0 % |
| 3O1-BEB(F)-C | 10.0 % |
| V-HB-C | 10.0 % |
| 1V-HB-C | 10.0 % |
| 5-BBB-C | 3.0 % |
| 2-BTB-O1 | 5.0 % |
| 3-HB-O2 | 5.0 % |
| V2-HH-3 | 5.0 % |
| V-HH-4 | 5.0 % |
| V-HHB-1 | 10.0 % |
| 1V2-HBB-2 | 10.0 % |
| 3-HHB-1 | 10.0 % |

T_{NI} = 84.1°C
T_{L} < -30°C
η₂₀ = 23.6 mPa·s
Δn = 0.144
Δε = 9.9
Vₜₕ = 1.43 V

According to the present invention, liquid crystal compositions which have a high optical anisotropy in particular, is excellent in miscibility at low temperatures, and have a wide range of a nematic phase while satisfying various properties required for TN-LCD or STN-LCD display modes, can be provided.

## Claims

1. A liquid crystal composition comprising, as a first component, at least one compound expressed by the general formula (1-1) or (1-2) 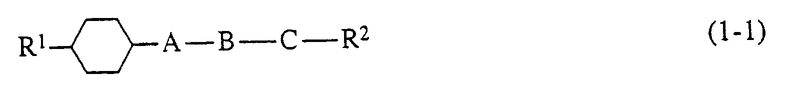 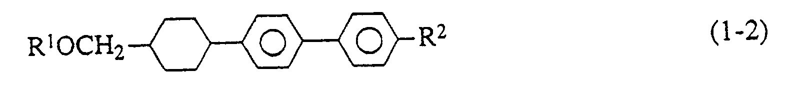 wherein R¹ and R² independently represent an alkyl group having 1 to 10 carbon atoms; and rings A, B, and C independently represent 1,4-phenylene provided that at least one of the rings A, B, and C represents 1,4-phenylene in which H at lateral position(s) are replaced by F,
comprising, as a second component, at least one compound selected from the group consisting of the compounds expressed by the general formula (2-a), (2-b), (2-c), (2-d), or (2-e) 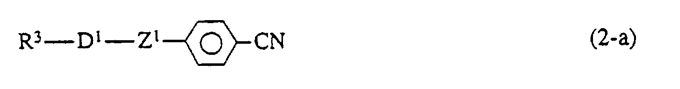 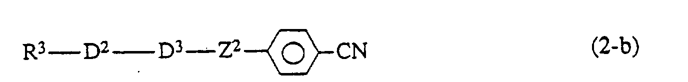 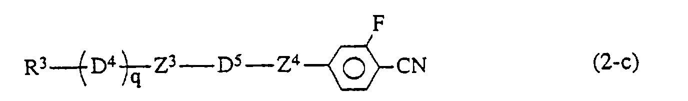 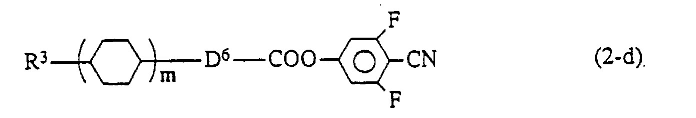 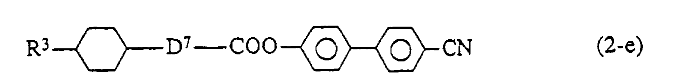 wherein R³ represents an alkyl group having 1 to 10 carbon atoms or an alkenyl group having 2 to 10 carbon atoms, any one or non-adjacent two or more methylene groups (-CH₂-) in the alkyl or alkenyl group may be replaced by oxygen atom (-O-); Z¹ represents -COO-, -C₂H₄-, or single bond; Z² and Z³ represent -C₂H₄- or single bond; Z⁴ represents -COO-, -C₂H₄-, or single bond; D¹ represents trans-1,4-cyclohexylene, 1,4-phenylene, or 1,3-dioxane-trans-2,5-diyl; D², D³, D⁴, D⁶, and D⁷ independently represent trans-1,4-cyclohexylene or 1,4-phenylene; D⁵ represents trans-1,4-cyclohexylene or 1,4-phenylene, one H at a lateral position of the 1,4-phenylene may be replaced by F; and q and m are independently 0 or 1, and
comprising, as a third component, at least one compound selected from the group consisting of the compounds expressed by the general formula (3)
R⁴-G¹-Z⁵-G²-R⁵ (3)
wherein R⁴ and R⁵ independently represent an alkyl group having 1 to 10 carbon atoms or an alkenyl group having 2 to 10 carbon atoms, any one or non-adjacent two or more methylene groups (-CH₂-) in the alkyl or alkenyl group may be replaced by oxygen atom (-O-); G¹ represents trans-1,4-cyclohexylene, 1,4-phenylene, or pyrimidine-2,5-diyl; G² represents trans-1,4-cyclohexylene or 1,4-phenylene; and Z⁵ represents -C≡C-, -CH=CH-, -C₂H₄-, -COO-, or single bond.

2. The liquid crystal composition according to claim 1 wherein the amount of the first component is 3 to 30 %, that of the second component is 30 to 70 %, and that of the third component is 10 to 50 %, respectively, based on the total weight of liquid crystal composition.

3. The liquid crystal composition according to claim 1 or 2 wherein the liquid crystal composition further comprises at least one compound selected from the group consisting of the compounds expressed by the general formula (4) or (5)
R⁶―J¹―Z⁶―J²―Z⁷―J³―R⁷ (4) 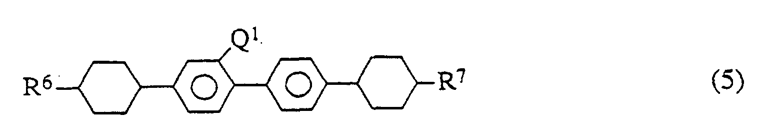
wherein R⁶ represents an alkyl group having 1 to 10 carbon atoms or an alkenyl group having 2 to 10 carbon atoms, any one or non-adjacent two or more methylene groups (-CH₂-) in the alkyl or alkenyl group may be replaced by oxygen atom (-O-); R⁷ represents an alkyl or alkoxy group having 1 to 10 carbon atoms, or alkoxymethyl group having 2 to 10 carbon atoms; J¹ represents trans-1,4-cyclohexylene, 1,4-phenylene, or pyrimidine-2,5-diyl group; J² represents trans-1,4-cyclohexylene or 1,4-phenylene, one H at a lateral position of the 1,4-phenylene may be replaced by F; J³ represents trans-1,4-cyclohexylene, 1,4-phenylene, or pyrimidine-2,5-diyl; Z⁶ represents -C₂H₄-, -COO-, or single bond; Z⁷ represents -C≡C-, -COO-, -CH=CH-, or single bond; and Q¹ represent H or F.

4. The liquid crystal composition according to any one of claims 1 to 3 wherein the liquid crystal composition further comprises at least one compound selected from the group consisting of the compounds expressed by the general formula (6) or (7) 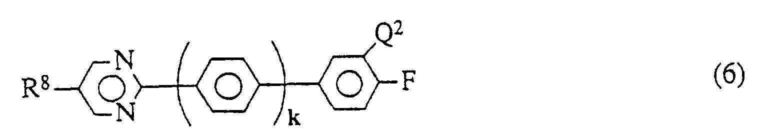 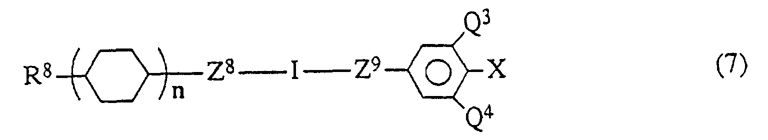 wherein R⁸ represents an alkyl group having 1 to 10 carbon atoms; I represents trans-1,4-cyclohexylene or 1,4-phenylene; Q², Q³, and Q⁴ independently represent H or F; Z⁸ and Z⁹ independently represent -COO-, -C₂H₄-, or single bond; k is 0 or 1; n is 0, 1, or 2; and X represents F or Cl.

5. A liquid crystal display device comprising a liquid crystal composition defined in any one of claims 1 to 4.

## Patentansprüche

1. Flüssigkristallzusammensetzung, umfassend als erste Komponente wenigstens eine durch die allgemeine Formel (1-1) oder (1-2) dargestellte Verbindung 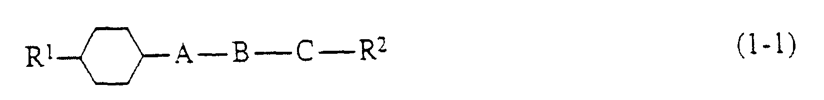 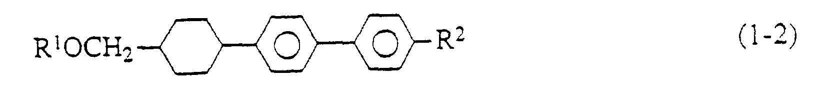 worin R¹ und R² unabhängig voneinander eine Alkyl-Gruppe mit 1 bis 10 Kohlenstoff-Atomen bedeuten; und die Ringe A, B und C unabhängig voneinander 1,4-Phenylen bedeuten, mit der Maßgabe, daß wenigstens einer der Ringe A, B und C 1,4-Phenylen bedeutet, worin H an der(den) Seitenposition(en) durch F ersetzt ist,
umfassend als zweite Komponente wenigstens eine Verbindung, ausgewählt aus der Gruppe bestehend aus den Verbindungen, die durch die allgemeine Formel (2-a), (2-b), (2-c), (2-d) oder (2-e) dargestellt sind 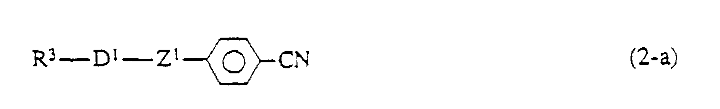 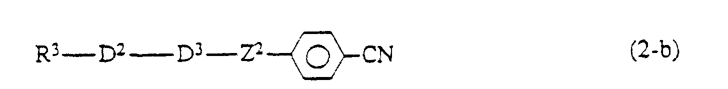 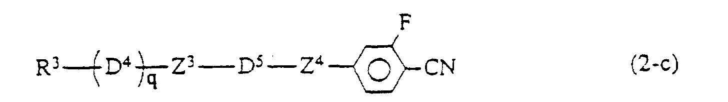 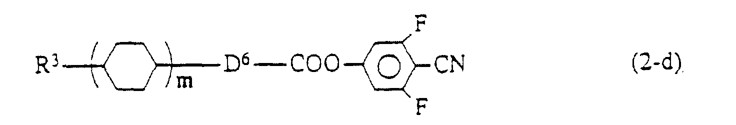 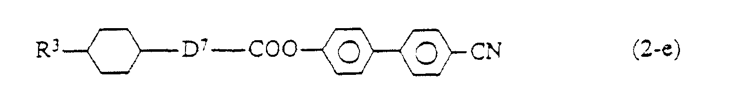 worin R³ eine Alkyl-Gruppe mit 1 bis 10 Kohlenstoff-Atomen oder eine Alkenyl-Gruppe mit 2 bis 10 Kohlenstoff-Atomen bedeutet, irgendeine oder zwei oder mehr nichtbenachbarte Methylen-Gruppen (-CH₂-) in der Alkyl- oder Alkenyl-Gruppe durch ein Sauerstoff-Atom (-O-) ersetzt sein können; Z¹ -COO-, -C₂H₄- oder eine Einfachbindung bedeutet; Z² und Z³ -C₂H₄- oder eine Einfachbindung bedeuten; Z⁴ -COO-, -C₂H₄- oder eine Einfachbindung bedeutet; D¹ trans-1,4-Cyclohexylen, 1,4-Phenylen oder 1,3-Dioxan-trans-2,5-diyl bedeutet; D², D³, D⁴, D⁶ und D⁷ unabhängig voneinander *trans*-1,4-Cyclohexylen oder 1,4-Phenylen bedeuten; D⁵ *trans*-1,4-Cyclohexylen oder 1,4-Phenylen bedeutet, ein H an einer Seitenposition von 1,4-Phenylen durch F ersetzt sein kann; und q und m unabhängig voneinander 0 oder 1 sind, und
umfassend als dritte Komponente wenigstens eine Verbindung, ausgewählt aus der Gruppe bestehend aus den durch die allgemeine Formel (3) dargestellten Verbindungen
R⁴-G¹-Z⁵-G²-R⁵ (3)
worin R⁴ und R⁵ unabhängig voneinander eine Alkyl-Gruppe mit 1 bis 10 Kohlenstoff-Atomen oder eine Alkenyl-Gruppe mit 2 bis 10 Kohlenstoff-Atomen bedeuten, irgendeine oder zwei oder mehr nichtbenachbarte Methylen-Gruppen (-CH₂-) in der Alkyl- oder Alkenyl-Gruppe durch ein Sauerstoff-Atom (-O-) ersetzt sein können; G¹ *trans*-1,4-Cyclohexylen, 1,4-Phenylen oder Pyrimidin-2,5-diyl bedeutet; G² *trans*-1,4-Cyclohexylen oder 1,4-Phenylen bedeutet; und Z⁵ -C≡C-, -CH=CH-, -C₂H₄-, -COO- oder eine Einfachbindung bedeutet.

2. Flüssigkristallzusammensetzung nach Anspruch 1, worin, jeweils bezogen auf das Gesamtgewicht der Flüssigkristallzusammensetzung, die Menge der ersten Komponente 3 bis 30%, die der zweiten Komponente 30 bis 70% und die der dritten Komponente 10 bis 50% beträgt.

3. Flüssigkristallzusammensetzung nach Anspruch 1 oder 2, wobei die Flüssigkristallzusammensetzung des weiteren wenigstens eine Verbindung umfaßt, ausgewählt aus der Gruppe bestehend aus den durch die allgemeine Formel (4) oder (5) dargestellten Verbindungen
R⁶―J¹―Z⁶―J²―Z⁷―J³―R⁷ (4) 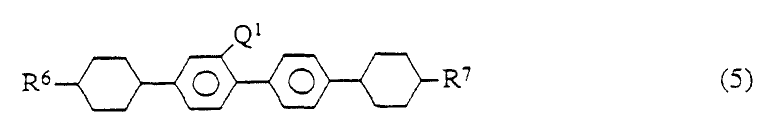
worin R⁶ eine Alkyl-Gruppe mit 1 bis 10 Kohlenstoff-Atomen oder eine Alkenyl-Gruppe mit 2 bis 10 Kohlenstoff-Atomen bedeutet, irgendeine oder zwei oder mehr nichtbenachbarte Methylen-Gruppen (-CH₂-) in der Alkyl- oder Alkenyl-Gruppe durch ein Sauerstoff-Atom (-O-) ersetzt sein können; R⁷ eine Alkyl- oder Alkoxy-Gruppe mit 1 bis 10 Kohlenstoff-Atomen oder eine Alkoxymethyl-Gruppe mit 2 bis 10 Kohlenstoff-Atomen bedeutet; J¹ eine *trans*-1,4-Cyclohexylen-, 1,4-Phenylen- oder Pyrimidin-2,5-diyl-Gruppe bedeutet; J² *trans*-1,4-Cyclohexylen oder 1,4-Phenylen bedeutet, ein H an einer Seitenposition von 1,4-Phenylen durch F ersetzt sein kann; J³ *trans*-1,4-Cyclohexylen, 1,4-Phenylen oder Pyrimidin-2,5-diyl bedeutet; Z⁶ -C₂H₄-, -COO- oder eine Einfachbindung bedeutet; Z⁷ -C≡C-, -COO-, -CH=CH- oder eine Einfachbindung bedeutet; und Q¹ H oder F bedeutet.

4. Flüssigkristallzusammensetzung nach einem der Ansprüche 1 bis 3, wobei die Flüssigkristallzusammensetzung des weiteren wenigstens eine Verbindung umfaßt, ausgewählt aus der Gruppe bestehend aus den durch die allgemeine Formel (6) oder (7) dargestellten Verbindungen 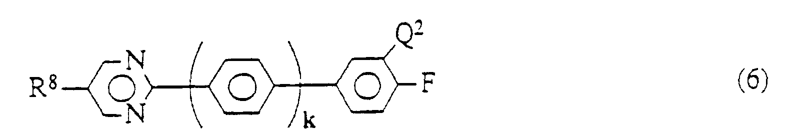 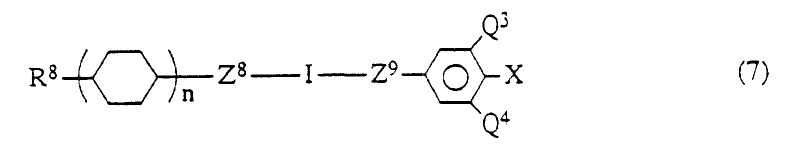 worin R⁸ eine Alkyl-Gruppe mit 1 bis 10 Kohlenstoff-Atomen bedeutet; I trans-1,4-Cyclohexylen oder 1,4-Phenylen bedeutet; Q², Q³ und Q⁴ unabhängig voneinander H oder F bedeuten; Z⁸ und Z⁹ unabhängig voneinander -COO-, -C2H4- oder eine Einfachbindung bedeuten; k 0 oder 1 ist; n 0, 1 oder 2 ist; und X F oder Cl bedeutet.

5. Flüssigkristallanzeigevorrichtung, umfassend eine in einem der Ansprüche 1 bis 4 definierte FlüssigkristallZusammensetzung.

## Revendications

1. Composition de cristal liquide comportant, comme premier composant, au moins un composé de formule générale (1-1) ou (1-2) 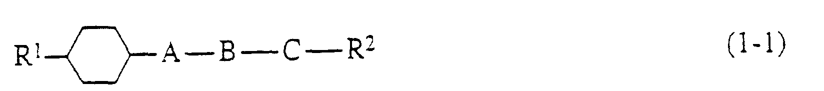 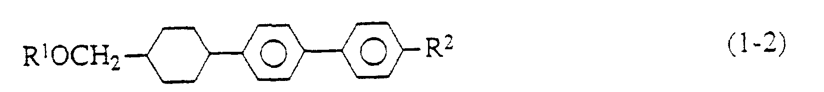 dans lesquelles R¹ et R² représentent indépendamment un groupe alkyle comportant de 1 à 10 atomes de carbone; et les anneaus A, B et C représentent indépendamment du 1,4-phénylène étant entendu qu'au moins un des anneaus A, B et C représente un 1,4-phénylène dans lequel les H en position(s) latérale(s) sont substitués par F,
comportant, comme deuxième composant, au moins un composé sélectionné dans la groupe comportant les composés de formule générale (2-a), (2-b), (2-c), (2-d), ou (2-e) 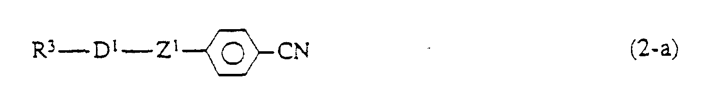 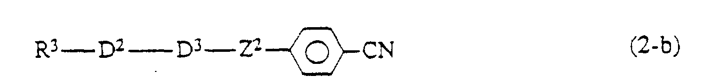 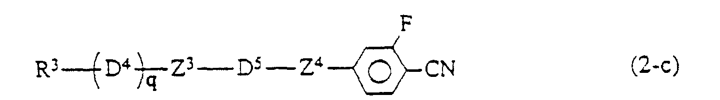 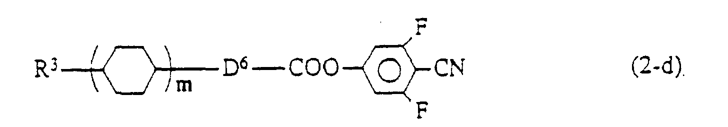 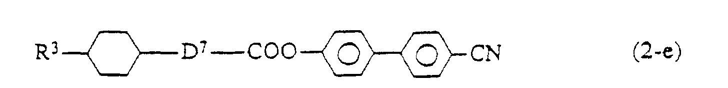 dans lesquelles R³ représente un groupe alkyle comportant de 1 à 10 atomes de carbone ou un groupe alkényle comportant de 2 à 10 atomes de carbone, chacun ou deux ou plus des groupes méthylène (-CH₂-) non-adjacents présents dans le groupe alkyle ou alkényle pouvant être substitués par un atome d'oxygène (-O-); Z¹ représente -COO-, -C₂H₄-, ou une liaison simple, Z² et Z³ représentent -C₂H₄- ou une liaison simple, Z⁴ représente -COO-, -C₂H₄-, ou une liaison simple, D¹ représente du *trans*-1,4-cyclohexylène, du 1-4-phénylène, ou du 1,3-dioxane*-trans*-2,5-diyl, D², D³, D⁴, D⁶, et D⁷ représentent indépendamment du *trans*-1,4-cyclohexylène ou du 1-4-phénylène, D⁵ représente du *trans*-1,4-cyclohexylène ou du 1,4-phénylène, en pouvant substituer un H en position latérale du 1,4-phénylène par F, et q et m valent indépendamment 0 ou 1,
comportant, comme troisième composant, au moins un composé sélectionné dans la groupe de composés ayant pour formule générale (3) :
R⁴-G¹-Z⁵-G²-R⁵ (3)
dans laquelle R⁴ et R⁵ représentent indépendamment un groupe alkyle comportant de 1 à 10 atomes de carbone ou un groupe alkényle comportant de 2 à 10 atomes de carbone, chacun ou deux ou plus des groupes méthylène (-CH₂-) non-adjacents présents dans le groupe alkyle ou alkényle pouvant être remplacés par un atome d'oxygène (-O-), G¹ représente un *trans-1,4-cyclohexylène,* un 1,4-phénylène, ou un pyrimidine-2,5-diyl, G² représente du *trans*-1,4-cyclohexylène ou du 1,4-phénylène, et Z⁵ représente -C≡C-, -CH=CH-, -C₂H₄-, -COO- ou une liaison simple.

2. Composition de cristal liquide d'après la revendication 1, dans laquelle la quantité du premier composant est de 3 à 30 %, celle du deuxième composant est de 30 à 70 % et celle du troisième composant est de 10 à 50 %, basées respectivement sur le poids total de la composition du cristal liquide.

3. Composition de cristal liquide d'après les revendications 1 ou 2, dans laquelle la composition de cristal liquide comporte en plus au moins un composé sélectionné dans la groupe des composés de formule générale (4) ou (5) :
R⁶―J¹―Z⁶―J²―Z⁷―J³―R⁷ (4) 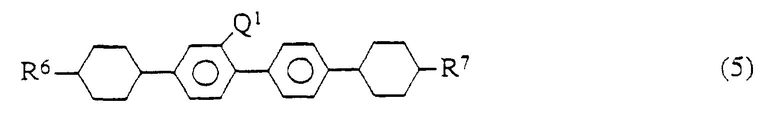
dans lesquelles R⁶ représente un groupe alkyle comportant de 1 à 10 atomes de carbone ou un groupe alkényle comportant de 2 à 10 atomes de carbone, chacun ou deux ou plus des groupes méthylène (-CH₂-) non-adjacents présents dans le groupe alkyle ou aikényle pouvant être remplacés par un atome d'oxygène (-O-); R⁷ représente un groupe alkyle ou alkoxy comportant de 1 à 10 atomes de carbone, ou un groupe alkoxyméthyle comportant de 2 à 10 atomes de carbone; J¹ représente un groupe *trans*-1,4-cyclohexylène, 1,4-phénylène ou pyrimidine-2,5-diyl, J² représente un *trans*-1,4-cyclohexylène ou un 1,4-phénylène, un H en position latérale du 1,4-phénylène pouvant être substitué par F; J³ représente un *trans*-1,4-cyclohexylène, un 1,4-phénylène ou un pyrimidine-2,5-diyl; Z⁶ représente -C₂H₄-, -COO-, ou une liaison simple; Z⁷ représente -C≡C-, -COO-, -CH=CH-, ou une liaison simple, et Q¹ représente H ou F.

4. Composition de cristal liquide d'après une des revendications de 1 à 3, dans laquelle la composition de cristal liquide comporte en plus au moins un composé sélectionné dans la groupe des composés de formule générale (6) ou (7) 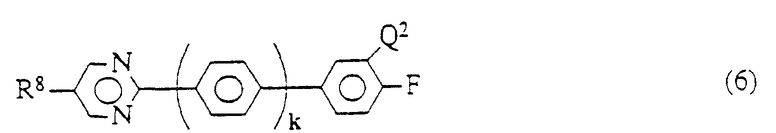 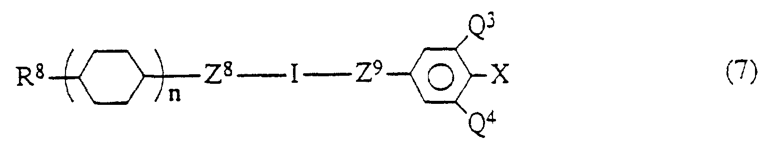 dans lesquelles R⁸ représente un groupe alkyle comportant de 1 à 10 atomes de carbone, I représente un *trans*-1,4-cyclohexylène ou un 1,4-phénylène, Q², Q³ et Q⁴ représentent indépendamment H ou F, Z⁸ et Z⁹ représentent indépendamment -COO-, -C₂H₄-, ou une liaison simple, k est égal à 0 ou 1, n est égal à 0, 1 ou 2, et X représente F ou Cl.

5. Dispositif d'affichage à cristaux liquides, comportant une composition de cristal liquide définie dans une des revendications de 1 à 4.
